# EUROPEAN PATENT APPLICATION

(11) **EP 4 751 888 A1**
(43) Date of publication of application: **03.06.2026**
(21) Application number: 23950521.7
(22) Date of filing: 09.12.2023
(51) Int. Cl.: B29C 64/336

(54) **SPOOL HOLDER FOR 3D PRINTER, 3D PRINTER, AND 3D PRINTING SYSTEM**

(30) Priority: 25.08.2023 CN 202322307959 U; 07.12.2023 WO PCT/CN2023/137255
(71) Applicant: Shenzhen Tuozhu Technology Co., Ltd., Shenzhen, Guangdong 518000 (CN)
(72) Inventor: ZHAO, Bo, Shenzhen, Guangdong 518000 (CN); XIONG, Rongming, Shenzhen, Guangdong 518000 (CN); LIU, Yiming, Shenzhen, Guangdong 518000 (CN); ZHAO, Yun, Shenzhen, Guangdong 518000 (CN)
(74) Representative: Grünecker Patent- und Rechtsanwälte PartG mbB
(86) International application number: PCT/CN2023/137710
(87) International publication number: WO 2025/043955

(57) **Abstract**

The present application provides a spool holder for a 3D printer, a 3D printer, and a 3D printing system. The spool holder comprises: a spool holder body; at least two barrel rotating shafts connected to the spool holder body, one barrel rotating shaft being used for placing one 3D printing spool; and a support leg fixedly connected to a bottom portion of the spool holder body, the support leg being used to support the spool holder body. One end of the support leg is fixedly connected to the bottom portion of the spool holder body, and the other end of the support leg is fixed to the 3D printer.

## Description

The present application claims priority to Chinese Patent Application No. 202322307959.7, filed with the China National Intellectual Property Administration on August 25, 2023 and entitled "FILAMENT SPOOL HOLDER FOR 3D PRINTER, 3D PRINTER, AND 3D PRINTING SYSTEM", and claims priority to International Application No. PCT/CN2023/137255, filed with the China National Intellectual Property Administration on December 07, 2023 and entitled "FILAMENT SPOOL HOLDER FOR 3D PRINTER, 3D PRINTER, AND 3D PRINTING SYSTEM", which are incorporated herein by reference in their entireties.

### TECHNICAL FIELD

The present application relates to the technical field of 3D printing, and in particular, to a filament spool holder for a 3D printer, a 3D printer, and a 3D printing system.

### BACKGROUND

A 3D printer, also known as a three-dimensional printer or an additive manufacturing device, is a process equipment for rapid prototyping. It typically achieves material printing by using digital technology. The 3D printer uses filaments such as polylactic acid (PLA) and acrylonitrile butadiene styrene (ABS) plastic as raw materials for printing, and the filaments are typically wound around a filament spool to form a coil for user convenience.

To facilitate user operation, the 3D printer is generally provided with a filament spool holder, and the filament spool holder can be used to support and hold the filament spool. A filament in the filament spool may be inserted into an extrusion structure of a printing head. When the 3D printer is running, the extrusion structure can extrude the filament to a nozzle of the printing head for use. Under the action of the extrusion structure, the filament at the printing head draws the filament in the filament spool to continuously move toward the nozzle.

### SUMMARY

The present application provides a filament spool holder for a 3D printer, a 3D printer, and a 3D printing system.

In a first aspect, embodiments of the present application provide a filament spool holder for a 3D printer. The filament spool holder comprises:
a filament spool holder body;
at least two filament cylinder rotating shafts, connected to the filament spool holder body, where each filament cylinder rotating shaft is configured to hold one 3D printing filament spool; and
a support stand, fixedly connected to a bottom of the filament spool holder body and configured to support the filament spool holder body, where one end of the support stand is fixedly connected to the bottom of the filament spool holder body, and the other end of the support stand is fixed to the 3D printer.

In the present application, the filament spool holder may be fixed to the 3D printer, thereby saving the use space of the 3D printer.

With reference to the first aspect, in a first possible implementation, the filament spool holder further includes at least two feeding/retracting apparatuses fixed to the filament spool holder body, where each feeding/retracting apparatus includes an extrusion mechanism and is configured to convey a filament in a 3D printing filament spool on a corresponding filament cylinder rotating shaft to the 3D printer, or to retract the filament to the 3D printing filament spool on the corresponding filament cylinder rotating shaft.

In the embodiments of the present application, a plurality of 3D printing filament spools can be held on the filament spool holder at the same time; additionally, arranging the feeding/retracting apparatuses can provide an acting force to the filament, such that even if the filament spool holder is positioned far away from the 3D printer, insufficient extrusion force for filament feeding or retracting does not occur. Even if the conveying distance of the filament from the 3D printing filament spool to the 3D printer is relatively long, the filament can be conveyed to the 3D printer or the filament can be retracted to the filament spool of the 3D printer due to the presence of the feeding/retracting apparatus on the filament spool holder.

With reference to the first aspect or any one of the foregoing possible implementations, in a second possible implementation, each feeding/retracting apparatus includes a filament feeding/retracting port, and the filament feeding/retracting port is configured to be connected to a filament tube for conveying the filament;
the filament spool holder further comprises a filament guide frame, the filament guide frame is arranged at at least one feeding/retracting apparatus, and the filament guide frame comprises an opening for the filament tube to pass through;
a connection line between the opening of the filament guide frame and the filament feeding/retracting port is perpendicular to a plane where the filament feeding/retracting port is located. By implementing the present application, the filament can be conveyed perpendicular to the filament feeding/retracting port, thereby reducing the filament feeding/retracting resistance of the filament in the filament tube.

With reference to the first aspect or any one of the foregoing possible implementations, in a third possible implementation, the at least two filament cylinder rotating shafts comprise filament cylinder rotating shafts distributed on two sides of the filament spool holder body, and the at least two feeding/retracting apparatuses comprise feeding/retracting apparatuses distributed on the two sides of the filament spool holder body, where each feeding/retracting apparatus corresponds to the filament cylinder rotating shaft located on a same side.

In the embodiments of the present application, by arranging the filament cylinder rotating shafts on two sides of the filament spool holder body, the space utilization of the filament spool holder can be improved. In addition, by arranging the filament cylinder rotating shafts on two sides of the filament spool holder body, the risk of overturning caused by the imbalance of the filament spool holder due to the filament spools of the 3D printer being suspended on one side of the filament spool holder body is avoided.

With reference to the first aspect or any one of the foregoing possible implementations, in a fourth possible implementation, the at least two filament cylinder rotating shafts comprise two filament cylinder rotating shafts located on one side of the filament spool holder body, the at least two feeding/retracting apparatuses comprise two feeding/retracting apparatuses located on the same side as the two filament cylinder rotating shafts, and the two feeding/retracting apparatuses are located between the two filament cylinder rotating shafts.

In the embodiments of the present application, the distance between the 3D printing filament spool and the feeding/retracting apparatus is reduced, such that the whole filament spool holder can be more simplified.

With reference to the first aspect or any one of the foregoing possible implementations, in a fifth possible implementation, for the two filament cylinder rotating shafts on the one side of the filament spool holder body, the axis of one filament cylinder rotating shaft is positioned higher than the axis of the other filament cylinder rotating shaft.

In the embodiments of the present application, by arranging the two filament cylinder rotating shafts on the one side in a vertically staggered manner with one higher than the other, the space occupied by the 3D printing filament spools held on the two filament cylinder rotating shafts on the horizontal plane can be reduced.

With reference to the first aspect or any one of the foregoing possible implementations, in a sixth possible implementation, the at least two filament cylinder rotating shafts are in one-to-one correspondence with the at least two feeding/retracting apparatuses. With reference to the first aspect or any one of the foregoing possible implementations, in a seventh possible implementation, for any one of the at least two feeding/retracting apparatuses, a filament entry of the feeding/retracting apparatus faces downward, and a filament exit of the feeding/retracting apparatus faces upward; or the filament entry of the feeding/retracting apparatus faces upward, and the filament exit of the feeding/retracting apparatus faces downward.

With reference to the first aspect or any one of the foregoing possible implementations, in an eighth possible implementation, the filament spool holder further includes:
a control component, configured to control the feeding/retracting apparatus to provide the filament in the 3D printing filament spool on the corresponding filament cylinder rotating shaft to the 3D printer, or to control the feeding/retracting apparatus to retract the filament to the 3D printing filament spool on the corresponding filament cylinder rotating shaft.

In the embodiments of the present application, the feeding apparatus can be controlled via the control component to assist filament feeding and retracting.

With reference to the first aspect or any one of the foregoing possible implementations, in a ninth possible implementation, the feeding/retracting apparatus comprises:
a motor;
a driving gear, connected to the motor, where the motor is configured to drive the driving gear to rotate; and
a driven gear, spaced apart from the driving gear, where the driving gear and the driven gear are configured to cooperate to clamp the filament supplied by the 3D printing filament spool.

With reference to the first aspect or any one of the foregoing possible implementations, in a tenth possible implementation, the feeding/retracting apparatus further includes: a gear reduction system, connected to a motor shaft of the motor, where an output gear of the gear reduction system meshes with the driving gear.

In the embodiments of the present application, through the gear reduction system, the problem of uncontrollable filament feeding speed caused by an excessively large torque applied to the driving gear can be avoided.

With reference to the first aspect or any one of the foregoing possible implementations, in an eleventh possible implementation, the feeding/retracting apparatus further comprises:
a motor-side Hall speed sensor, configured to measure rotational speed information of the motor; and
a filament-side Hall speed sensor, configured to measure rotational speed information of the driven gear.

In the embodiments of the present application, the rotational speed information of the driven gear can be measured based on the filament-side Hall speed sensor, and the movement information of the filament can be determined based on the rotational speed information of the driven gear. Then, whether filament slippage occurs can be automatically detected based on the movement information of the filament and the rotational speed information of the motor.

With reference to the first aspect or any one of the foregoing possible implementations, in a twelfth possible implementation, the at least two filament cylinder rotating shafts being connected to the filament spool holder body includes: the at least two filament cylinder rotating shafts being connected to the filament spool holder body via fixed tubes, the at least two filament cylinder rotating shafts being rotatably connected to the fixed tubes, and the fixed tubes being fixedly connected to the filament spool holder body.

With reference to the first aspect or any one of the foregoing possible implementations, in a thirteenth possible implementation, the support stand comprises a rotating component and a fixed component, wherein one end of the rotating component is fixedly connected to the bottom of the filament spool holder body, and the other end of the rotating component is rotatably connected to one end of the fixed component;
the other end of the fixed component is fixed to the 3D printer.

In the present application, the filament spool holder body can rotate relative to the 3D printer, and the 3D printing filament spool is held on the filament spool holder. After the printing materials on the 3D printing filament spool are used up, the user can rotate the filament spool holder body to a comfortable position for filament change. This facilitates the filament change operation of the user while saving the space of the 3D printer.

With reference to the first aspect or any one of the foregoing possible implementations, in a fourteenth possible implementation, the support stand further comprises a locking member, and the locking member is disposed at a position where the rotating component is rotatably connected to the fixed component;
the locking member is configured to prevent, in a locked state, the rotating component from rotating relative to the fixed component, or allow, in a released state, the rotating component to rotate relative to the fixed component.

In the present application, the rotation between the rotating component and the fixed component is enabled or disabled by the locking member, such that the filament spool holder body can rotate relative to the 3D printer, and the filament spool holder body can also be fixed when the filament spool holder body needs to be fixed relative to the 3D printer.

With reference to the first aspect or any one of the foregoing possible implementations, in a fifteenth possible implementation, the support stand further comprises a rotation angle limiting member, and the rotation angle limiting member is disposed between the rotating component and the fixed component.

**In** the embodiments of the present application, by providing the rotation angle limiting member to limit the rotation angle of the filament spool holder body relative to the 3D printer, the filament spool holder body can be prevented from having an excessively large rotation angle relative to the 3D printer and thereby pulling on the printing material conveyed to the 3D printer from the 3D printing filament spool.

With reference to the first aspect or any one of the foregoing possible implementations, in a sixteenth possible implementation, at least one of the rotating component and the fixed component is provided with a rotation angle limiting member. In the embodiments of the present application, by providing the rotation angle limiting member on the rotating component and/or the fixed component to limit the rotation angle of the filament spool holder body relative to the 3D printer, the filament spool holder body can be prevented from having an excessively large rotation angle relative to the 3D printer and thereby pulling on the printing material conveyed to the 3D printer from the 3D printing filament spool.

With reference to the first aspect or any one of the foregoing possible implementations, in a seventeenth possible implementation, the other end of the support stand is detachably fixed to a frame of the 3D printer.

**In** the present application, the filament spool holder can be fixed to the 3D printer via a snap-fit connection, without adding additional components. This is simple and convenient, and can save the use space of the 3D printer.

With reference to the first aspect or any one of the foregoing possible implementations, in an eighteenth possible implementation, the 3D printer is of a gantry structure, and the filament spool holder body is plate-shaped;
the other end of the support stand is fixed to a cross beam of the 3D printer, and a plane where the filament spool holder body is located is inclined relative to a plane formed by a column of the 3D printer and the cross beam.

In the present application, the printing material in the 3D printing filament spool is conveyed to the 3D printer through a filament tube. That is, the filament tube connects the filament spool holder and the 3D printer. When the support stand of the filament spool holder is fixed to the cross beam of the 3D printer, the filament tube will be bent. By implementing the present application, the bending radius of the filament tube can be increased, thereby reducing the resistance of the filament in the filament tube.

In a second aspect, the embodiments of the present application further provide a 3D printer. The 3D printer includes the filament spool holder described with reference to the first aspect or any one of the foregoing possible implementations in the first aspect, where a filament spool holder body of the filament spool holder is fixedly connected to a frame of the 3D printer.

In a third aspect, the embodiments of the present application further provide a 3D printer system. The 3D printer system includes a 3D printer and the filament spool holder described with reference to the first aspect or any one of the foregoing possible implementations in the first aspect.

It should be understood that for implementation and beneficial effects of the foregoing aspects of the present application, reference may be made to each other.

### BRIEF DESCRIPTION OF THE DRAWINGS

FIG. 1 is a schematic diagram of a scenario of a 3D printing system according to an embodiment of the present application;
FIG. 2 is a schematic diagram of a planar structure of a filament spool holder according to an embodiment of the present application;
FIG. 3 is a schematic diagram of a planar structure of a filament spool holder according to an embodiment of the present application;
FIG. 4 is a schematic diagram of a planar structure of a filament spool holder according to an embodiment of the present application;
FIG. 5 is a schematic diagram of a planar structure of a filament spool holder according to an embodiment of the present application;
FIG. 6 is a schematic diagram of a three-dimensional structure of a filament spool holder according to an embodiment of the present application;
FIG. 7a is a schematic diagram of a planar structure of a feeding/retracting apparatus according to an embodiment of the present application;
FIG. 7b is a schematic diagram of a planar structure of a feeding/retracting apparatus according to an embodiment of the present application;
FIG. 8 is a schematic diagram of a planar structure of a feeding/retracting apparatus according to an embodiment of the present application;
FIG. 9 is a schematic diagram of a planar structure of a feeding/retracting apparatus according to an embodiment of the present application;
FIG. 10 is a schematic diagram of a planar structure of a feeding/retracting apparatus according to an embodiment of the present application;
FIG. 11 is a schematic diagram of another three-dimensional structure of a filament spool holder according to an embodiment of the present application;
FIG. 12 is a schematic diagram of another scenario of a 3D printing system according to an embodiment of the present application;
FIG. 13a is a schematic structural diagram of a support stand according to an embodiment of the present application;
FIG. 13b is an exploded view of a support stand according to an embodiment of the present application;
FIG. 13c is a diagram illustrating a support stand in a rotation state according to an embodiment of the present application;
FIG. 14 is a diagram illustrating the filament spool holder shown in FIG. 11 in a rotation state;
FIG. 15 is a schematic diagram of another three-dimensional structure of a filament spool holder according to an embodiment of the present application; and
FIG. 16 is a diagram illustrating the filament spool holder shown in FIG. 15 in a rotation state.

### DETAILED DESCRIPTION

Implementations of the technical solutions of the present application are further described in detail below with reference to the accompanying drawings.

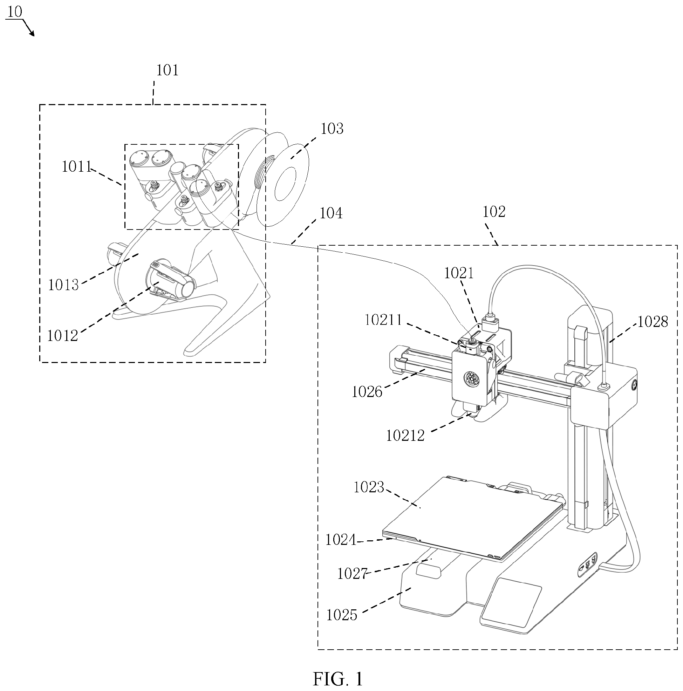

Referring to FIG. 1, FIG. 1 is a schematic diagram of a scenario of a 3D printing system according to an embodiment of the present application. As shown in FIG. 1, a 3D printing system 10 comprises a filament spool holder 101 and a 3D printer 102 connected to the filament spool holder 101.

The filament spool holder 101 comprises a feeding/retracting apparatus 1011, a filament cylinder rotating shaft 1012, and a filament spool holder body 1013. The filament cylinder rotating shaft 1012 may comprise a sleeve and a fixed tube. The sleeve is detachably connected to the fixed tube of the filament spool holder 101, and the filament cylinder rotating shaft 1012 is configured to suspend or support a filament spool 103. A filament 104 is wound around the filament spool 103, and the filament 104 may be provided to the 3D printer through the feeding/retracting apparatus 1011, or the filament 104 may be retracted to the filament spool 103 through the feeding/retracting apparatus 1011. That is, the feeding/retracting apparatus 1011 can be configured to both feed and retract filaments.

The 3D printer 102 comprises a printing head 1021. The printing head 1021 comprises a filament guide unit 10211, a nozzle 10212, and an extrusion structure arranged between the filament guide unit 10211 and the nozzle 10212. The extrusion structure is also a feeding/retracting apparatus. During the feeding process of the filament spool holder 101, the filament 104 enters the extrusion structure after passing through the filament guide unit 10211, and the extrusion structure provides the filament 104 to the nozzle 10212. During the retracting process of the filament spool holder 101, the 3D printer 102 cuts off the filament 104 in the printing head 1021, the extrusion structure conveys the filament 104 to the filament spool holder 101, and the feeding/retracting apparatus 1011 in the filament spool holder 101 retracts the filament 104 to the filament spool 103.

In one embodiment, the 3D printer 102 may, for example, cut off the filament 104 between the extrusion structure and the nozzle 10212, or cut off the filament 104 within the extrusion structure. The position where the 3D printer cuts off a printing material is not limited in the present application.

Illustratively, the 3D printer 102 further comprises a build plate 1023, a heatbed 1024, and a base 1025. The heatbed 1024 is arranged on a side, facing the nozzle 1022, of the base 1025, and the heatbed 1024 has a heating function. The build plate 1023 is arranged on a side, facing the nozzle 1022, of the heatbed 1024, the heat of the heatbed 1024 can be conducted to the build plate 1023, and the nozzle 1022 can extrude a printing material in a molten state onto the build plate 1023.

In a specific implementation, the 3D printer adjusts the temperatures of the nozzle 1022 and the heatbed 1024 based on the material information of the filament 104. The 3D printer adjusts the temperature of the nozzle 1022 to heat the filament 104 to a molten state, and adjusts the temperature of the heatbed 1024 to adhere the filament 104 extruded from the nozzle 1022 to the build plate 1023. The printing head 1021 is slidably connected to a first guide rail 1026, and the printing head 1021 can move in the length direction of the first guide rail 1026, that is, implementing a printing path of the 3D printer 102 in the length direction of the first guide rail 1026. Moreover, the heatbed 1024 is slidably connected to a second guide rail 1027, and the 3D printer 102 moves in the length direction of the second guide rail 1027, that is, implementing a printing path of the 3D printer 102 in the length direction of the second guide rail 1027. The length direction of the second guide rail 1027 is perpendicular to the length direction of the first guide rail 1026. Furthermore, the first guide rail 1026 is slidably connected to a third guide rail 1028, and the 3D printer 102 can implement a printing path in a direction perpendicular to the length of the second guide rail 1027 and perpendicular to the length of the first guide rail 1026 by moving the first guide rail 1026 along the third guide rail 1028. That is, the 3D printer 102 can implement three printing paths in three mutually perpendicular directions, thereby printing three-dimensional objects.

In the embodiments of the present application, the structure of the filament spool holder can assist the filament feeding and retracting and enables a plurality of 3D printing filament spools to be held on the filament spool holder.

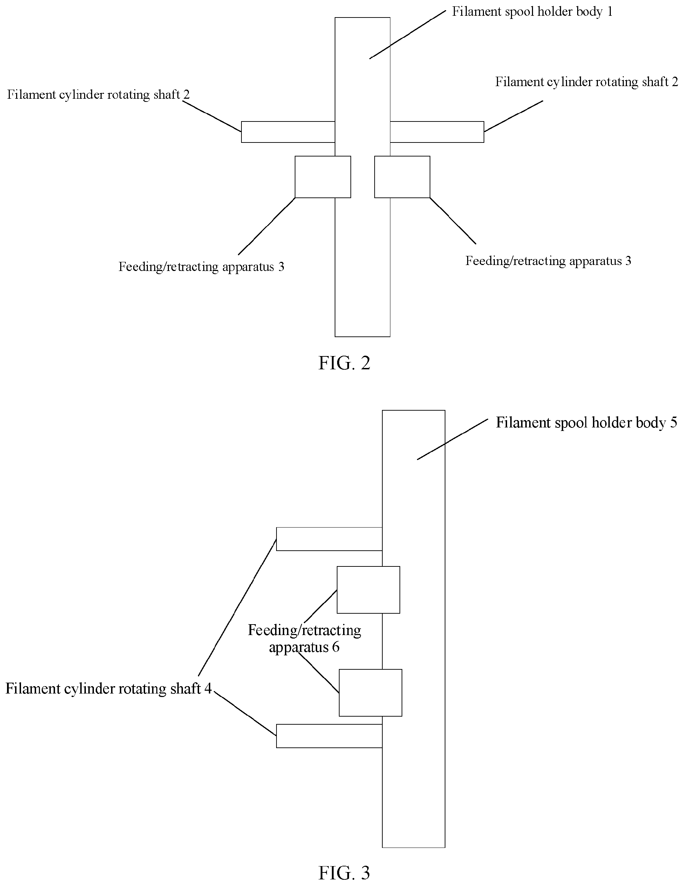

The structure of the filament spool holder will be described in detail below with reference to FIG. 2 to FIG. 7b.

Referring to FIG. 2, FIG. 2 is a schematic structural diagram of a filament spool holder according to an embodiment of the present application. The filament spool holder may comprise:
a filament spool holder body 1;
at least two filament cylinder rotating shafts 2 connected to the filament spool holder body 1, where each filament cylinder rotating shaft 2 is configured to hold one 3D printing filament spool; and
at least two feeding/retracting apparatuses 3 fixed to the filament spool holder body 1, where each feeding/retracting apparatus 3 comprises an extrusion mechanism and is configured to convey a filament in a 3D printing filament spool on a corresponding filament cylinder rotating shaft 2 to the 3D printer, or to retract the filament to the 3D printing filament spool on the corresponding filament cylinder rotating shaft 2.

During a specific implementation, the filament cylinder rotating shaft 2 may be rotatably or fixedly connected to the filament spool holder body 1.

Specifically, the filament cylinder rotating shaft 2 may comprise a sleeve and a fixed tube. The sleeve is sleeved over the fixed tube and configured to suspend or support the 3D printing filament spool.

Specifically, the filament cylinder rotating shaft 2 may alternatively comprise a sleeve but not comprise a fixed tube. The connection between the filament cylinder rotating shaft 2 and the filament spool holder body 1 may be understood as a direct connection between the filament cylinder rotating shaft 2 and the filament spool holder body 1 or an indirect connection between the filament cylinder rotating shaft 2 and the filament spool holder body 1 via a fixed tube.

The filament cylinder rotating shaft 2 being able to rotate relative to the filament spool holder body 1 may be understood as below: The sleeve is rotatably connected to the fixed tube, and the fixed tube is fixed to the filament spool holder body 1; or the sleeve is fixedly connected to the fixed tube, and the fixed tube is rotatably connected to the filament spool holder body 1; or the sleeve is rotatably connected to the fixed tube, and the fixed tube is rotatably connected to the filament spool holder body 1; or the sleeve is fixedly connected to the fixed tube, and the fixed tube is fixed to the filament spool holder body 1.

The connection comprises a detachable connection and a non-detachable connection. For example, the fixed connection may comprise a detachable fixed connection and a non-detachable fixed connection, the rotational connection may comprise a detachable rotational connection and a non-detachable rotational connection, and the sliding connection may comprise a detachable sliding connection and a non-detachable sliding connection. Likewise, the connection may also be a direct connection or an indirect connection via a component. For example, in the case of a detachable fixed connection, it means that in the mounted state, the positional relationship between at least two connected objects can be fixed; similarly, there are rotational connections, sliding connections, etc.

To ensure that the filament in the 3D printing filament spool can be stably moved from the 3D printing filament spool to the printing head of the 3D printer, or stably retracted to the 3D printing filament spool, the embodiments of the present application provide a filament spool holder including a feeding/retracting apparatus. The feeding/retracting apparatus is arranged on the filament spool holder to assist the filament feeding and retracting of the feeding/retracting apparatus of the 3D printer, which can effectively avoid the problem that the printing head has no filament to use due to an insufficient extrusion force of the extrusion structure, or the problem that the filament, when needed to be retracted, cannot be properly retracted to the 3D printing filament spool, thereby improving the efficiency and stability of filament feeding and retracting of the 3D printer.

**In** the embodiments of the present application, the filament spool holder may comprise one filament spool holder body 1. The filament spool holder body 1 can be configured to hold the filament cylinder rotating shaft 2 and the feeding/retracting apparatus 3. The shape of the filament spool holder may be designed based on an actual situation. For example, the filament spool holder may be designed as a rectangular prism, a cube, an ellipsoid, etc., and the filament spool holder body 1 may be in a flat shape or the like. This is not limited in the embodiments of the present application.

The filament spool holder may further comprise filament cylinder rotating shafts 2 configured to hold the 3D printing filament spools, and each filament cylinder rotating shaft 2 can be configured to hold one 3D printing filament spool. The filament cylinder rotating shaft 2 may be connected to the filament spool holder body 1. Specifically, the axis of the filament cylinder rotating shaft 2 is perpendicular to the surface of the filament spool holder body 1, on which the junction of the filament cylinder rotating shaft 2 and the filament spool holder body 1 is located. The filament cylinder rotating shaft 2 can rotate relative to the filament spool holder body 1, so as to rotate with the 3D printing filament spool when the 3D printing filament spool rotates, thereby reducing the frictional force and resistance applied to the 3D printing filament spool.

In a possible implementation, when a user uses the 3D printer to print an object, filaments of different colors and different materials may be needed, and the filaments of different colors and different materials correspond to different 3D printing filament spools. To improve the efficiency of 3D printing, there may be at least two filament cylinder rotating shafts 2, and filaments of different colors and different materials may be held and stored on different filament cylinder rotating shafts 2. **In** this way, the filament spool holder with the at least two filament cylinder rotating shafts 2 can hold at least two 3D printing filament spools, and the filaments stored in the at least two 3D printing filament spools may be of different colors and/or different materials. This is not limited in the embodiments of the present application.

In the filament spool holder, there may also be at least two feeding/retracting apparatuses. Specifically, the at least two filament cylinder rotating shafts are in one-to-one correspondence with the at least two feeding/retracting apparatuses. That is, each feeding/retracting apparatus corresponds to one filament cylinder rotating shaft, and each feeding/retracting apparatus has a filament threaded through it from a 3D printing filament spool held on a corresponding filament cylinder rotating shaft.

The extrusion mechanism may be provided with a motor, a gear set, etc. The motor drives the gear set to rotate, and a filament between the gear set moves, due to the rotation of the gear set, toward the printing head or the 3D printing filament spool, so as to complete the filament feeding or retracting. Compared with completing the filament feeding and retracting only by the extrusion structure in the printing head, in the embodiments of the present application, the feeding/retracting apparatus arranged on the filament spool holder is also used, such that the filament feeding and retracting can be more stable.

In an embodiment of the present application, although the at least two filament cylinder rotating shafts can allow the 3D printer to achieve 3D printing with filaments of different colors and different materials, the space occupied by the filament spool holder is increased. To reduce the space occupied by the at least two filament cylinder rotating shafts and the at least two feeding/retracting apparatuses, in an example, the at least two filament cylinder rotating shafts and the at least two feeding/retracting apparatuses may be arranged with reference to the following positions:
The at least two filament cylinder rotating shafts comprise filament cylinder rotating shafts distributed on two sides of the filament spool holder body, and the at least two feeding/retracting apparatuses comprise feeding/retracting apparatuses distributed on the two sides of the filament spool holder body, where each feeding/retracting apparatus corresponds to the filament cylinder rotating shaft located on the same side. Specifically, the at least two filament cylinder rotating shafts may be arranged on the two sides of the filament spool holder body, so as to make full use of the space on different side surfaces of the filament spool holder body. For any one filament cylinder rotating shaft, the axis thereof may be perpendicular to the side surface of the filament spool holder body to which the filament cylinder rotating shaft is connected.

In addition, for the at least two feeding/retracting apparatuses, they may also be distributed like the filament cylinder rotating shafts. That is, the at least two feeding/retracting apparatuses may also be arranged on the two sides of the filament spool holder body. For any one feeding/retracting apparatus, it may correspond to the filament cylinder rotating shaft located on the same side of the filament spool holder body. That is, the feeding/retracting apparatus may be embedded with a filament in the 3D printing filament spool held on the filament cylinder rotating shaft located on the same side of the filament spool holder body.

In an embodiment of the present application, the at least two filament cylinder rotating shafts and the at least two feeding/retracting apparatuses may be specifically arranged with reference to the following positions:
The at least two filament cylinder rotating shafts comprise two filament cylinder rotating shafts located on one side of the filament spool holder body, the at least two feeding/retracting apparatuses comprise two feeding/retracting apparatuses located on the same side as the two filament cylinder rotating shafts, and the two feeding/retracting apparatuses are located between the two filament cylinder rotating shafts.

As shown in FIG. 3, at least two filament cylinder rotating shafts 4 may comprise two filament cylinder rotating shafts 4 located on the same side of a filament spool holder body 5, and the two filament cylinder rotating shafts 4 may be arranged on the same side of the filament spool holder body 5 and spaced apart from each other. Correspondingly, two feeding/retracting apparatuses 6 corresponding to the two filament cylinder rotating shafts 4 may also be arranged on this side of the filament spool holder body 5, so as to reduce the distance between the 3D printing filament spool and the feeding/retracting apparatuses 6, thereby reducing the traveling distance of filaments. In addition, arranging the filament cylinder rotating shafts 4 and the feeding/retracting apparatuses 6 on the same side of the filament spool holder body 5 can reduce the filament bending between the 3D printing filament spool and the feeding/retracting apparatuses 6. This not only simplifies the filament spool holder but also reduces the frictional force during filament feeding and retracting, thereby improving the stability of filament feeding and retracting.

In a possible implementation, the two feeding/retracting apparatuses 6 on the same side may be located between the two filament cylinder rotating shafts 4 on this side. In one aspect, the whole filament spool holder can be more simplified, such that the filaments can be conveyed to the 3D printer from positions close to each other, thereby avoiding the waste of space caused by the conveyance of a plurality of filaments to the printer from different positions. In another aspect, the excessively long traveling distance of the filaments caused by the excessively far distance of the feeding/retracting apparatuses 6 from the corresponding filament cylinder rotating shafts 4 can also be avoided.

As an example, the two feeding/retracting apparatuses are located in the center of the filament spool holder body 5.

As an example, the two filament cylinder rotating shafts 4 on the same side are located at two ends of the filament spool holder body 5.

As an example, the two filament cylinder rotating shafts located on the same side of the filament spool holder body may be arranged with reference to the following positions:
For the two filament cylinder rotating shafts on the same side of the filament spool holder body, the axis of one filament cylinder rotating shaft is positioned higher than the axis of the other filament cylinder rotating shaft.

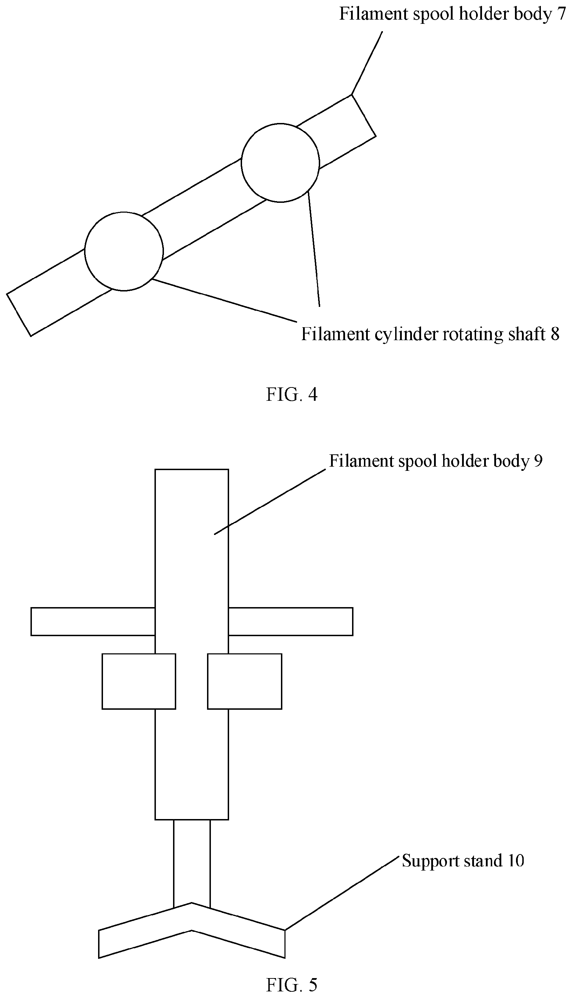

As shown in FIG. 4, for two filament cylinder rotating shafts 8 on the same side of a filament spool holder body 7, the axis of one filament cylinder rotating shaft 8 may be arranged to be higher than the axis of the other filament cylinder rotating shaft 8. Compared with a parallel arrangement, the vertically staggered arrangement with one higher than the other can reduce the space occupied by the two filament cylinder rotating shafts 8 in the horizontal direction.

In an embodiment of the present application, the filament spool holder may further comprise:
a support stand fixedly connected to the bottom of the filament spool holder body, where the support stand is configured to support the filament spool holder body.

In a possible implementation, as shown in FIG. 5, the bottom of a filament spool holder body 9 of a filament spool holder may be fixedly connected to a support stand 10, so as to support the filament spool holder body 9 via the support stand 10.

As an example, one end of the support stand is fixedly connected to the bottom of the filament spool holder body, and the other end of the support stand is fixed to a 3D printer.

The support stand can hold the filament spool holder body in place on the 3D printer. One end of the support stand may be fixedly connected to the bottom of the filament spool holder body, and the other end may be fixedly connected to the 3D printer. The other end of the support stand may be fixed to different positions of the 3D printer based on an actual situation. For example, the other end of the support stand may be fixed to the top of the 3D printer or to a side surface of the 3D printer. This is not limited in the embodiments of the present application.

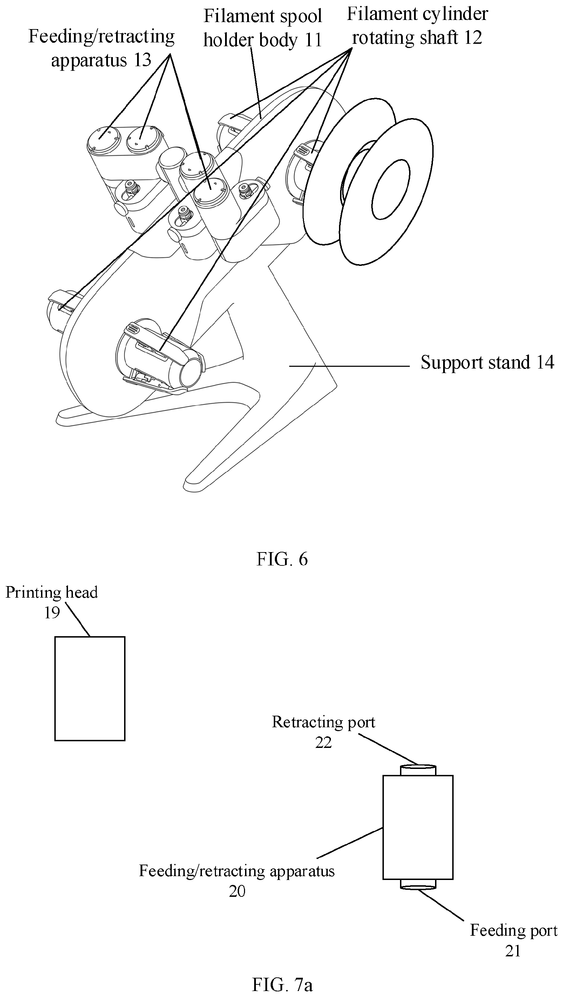

Illustratively, as shown in FIG. 6, two sides of a filament spool holder body 11 are each provided with at least two filament cylinder rotating shafts 12, and two filament cylinder rotating shafts 12 on the same side are arranged in a vertically staggered manner with one higher than the other; feeding/retracting apparatuses 13 are each arranged between the two filament cylinder rotating shafts 12 on the respective side and fixed to the filament spool holder body 11. The bottom of the filament spool holder body 11 is connected to a support stand 14.

In some feasible embodiments, for any one of the at least two feeding/retracting apparatuses, a feeding port of the feeding/retracting apparatus faces downward, and a retracting port of the feeding/retracting apparatus faces upward; or the feeding port of the feeding/retracting apparatus faces upward, and the retracting port of the feeding/retracting apparatus faces downward.

In one embodiment, to reduce the winding of the movement path of the filament, the orientations of the feeding port and the retracting port of the feeding/retracting apparatus may be designed based on the height of the printing head in the vertical direction and the height of the feeding/retracting apparatus in the vertical direction. The feeding port is connected to a filament on the 3D printing spool, and the retracting port is connected to the printing head.

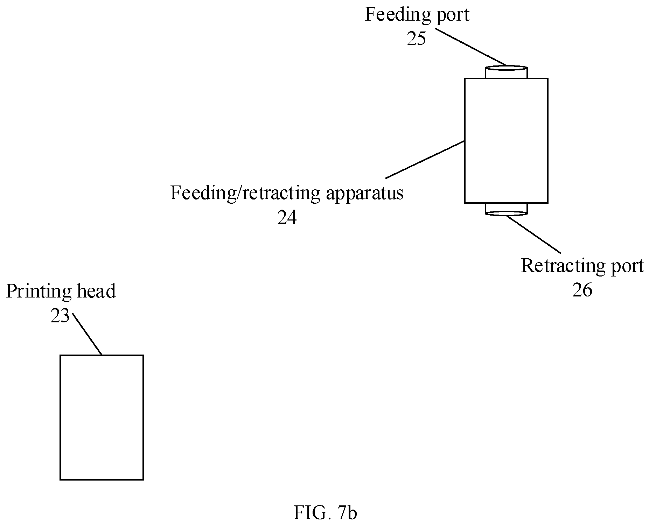

For example, as shown in FIG. 7a, when a printing head 19 is positioned higher than a feeding/retracting apparatus 20, the feeding/retracting port of the feeding/retracting apparatus 20 may be arranged as below: a feeding port 21 faces downward, and a retracting port 22 faces upward. As shown in FIG. 7b, when a printing head 23 is positioned lower than a feeding/retracting apparatus 24, the feeding/retracting port of the feeding/retracting apparatus 24 may be arranged as below: a feeding port 25 faces upward, and a retracting port 26 faces downward.

In an embodiment of the present application, the feeding/retracting apparatus may comprise:
a motor;
a driving gear connected to the motor, where the motor is configured to drive the driving gear to rotate; and
a driven gear spaced apart from the driving gear, where the driving gear and the driven gear are configured to cooperate to clamp the filament supplied by the 3D printing filament spool.

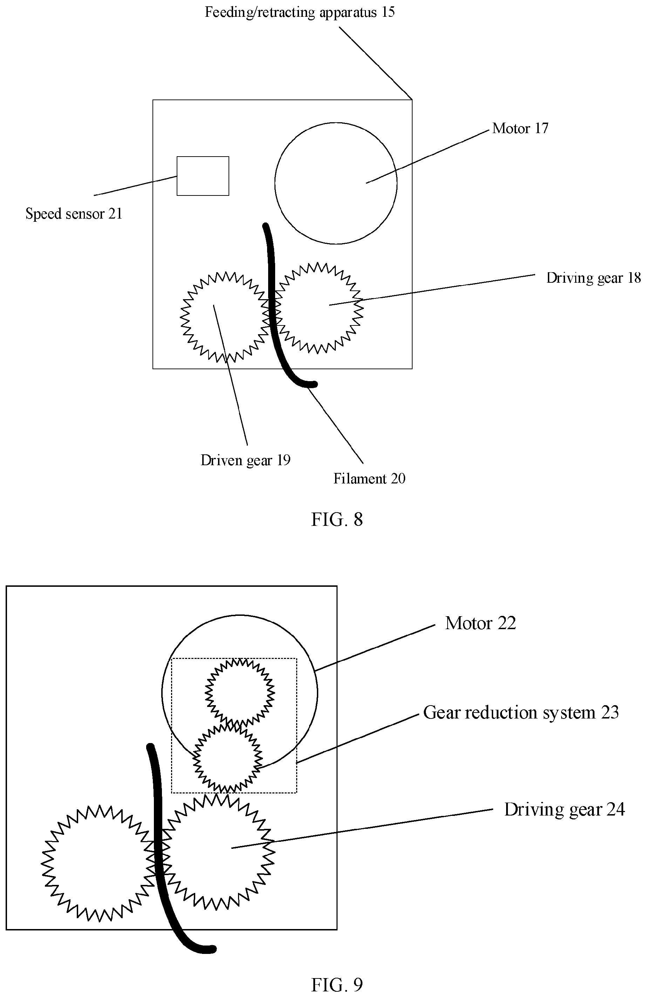

**In** some feasible embodiments, as shown in FIG. 8, a feeding/retracting apparatus 15 may comprise a motor 17 configured to drive a driving gear 18 to rotate, and the driving gear 18 may be connected to a motor shaft of the motor 17. A driven gear 19 may be spaced apart from the driving gear 18, and the gap therebetween may be less than or equal to the diameter of a filament 20. The driving gear 18 and the driven gear 19 can cooperate to clamp the filament 20 within the gap and convey, during the rotation of the driving gear 18, the filament 20 to the printing head or retract the filament to the 3D printing filament spool based on a frictional force between the driving gear 18 and the filament 20 and a pressure applied by the driven gear 19 and the driving gear 18 to the filament 20.

Illustratively, a speed sensor 21 may be additionally provided in the feeding/retracting apparatus 15, and the speed sensor 21 can be configured to measure rotational speed information of the motor 17 and movement information of the filament 20. By implementing the embodiments of the present application, the theoretical movement information of the filament can be determined based on the rotational speed information of the motor, and whether filament slippage occurs is automatically detected by comparing the theoretical movement information of the filament with actually collected movement information of the filament.

In some feasible embodiments, the feeding/retracting apparatus of the filament spool holder may further comprise:
a gear reduction system connected to a motor shaft of the motor, where an output gear of the gear reduction system meshes with the driving gear.

In the embodiments of the present application, to prevent the motor from applying an excessively large torque to the driving gear, which results in an excessively high filament feeding and retracting speed, the gear reduction system may be arranged between the motor and the driving gear. Specifically, as shown in FIG. 9, a motor shaft of a motor 22 may be connected to a driving gear 24 via a gear reduction system 23, and an output gear of the gear reduction system 23 may mesh with the driving gear 24. In this way, the torque actually applied by the motor 22 to the driving gear 24 is a controlled torque. By implementing the embodiments of the present application, the speed of filament feeding and retracting can be controlled.

In some feasible embodiments, the speed sensor may comprise:
a motor-side Hall speed sensor configured to measure the rotational speed information of the motor. Illustratively, the motor is provided with a magnet that rotates with the motor, and the magnet may be arranged inside the motor or attached to the surface of the motor. Alternatively, the raw material for manufacturing the motor may comprise, but is not limited to, a magnet.

The speed sensor may also comprise a filament-side Hall speed sensor configured to measure rotational speed information of the driven gear. Illustratively, the driven gear is provided with a magnet that rotates with the driven gear, and the magnet may be arranged on the surface of the driven gear. Alternatively, the raw material for manufacturing the driven gear comprises, but is not limited to, a magnet.

The motor-side Hall speed sensor may be arranged for the motor, and the motor-side Hall speed sensor may obtain the rotational speed information of the motor by measuring the rotational speed of the magnet that is arranged on the motor and rotates with the motor. The filament-side Hall speed sensor arranged for the filament may measure the rotational speed of the magnet that is arranged on the driven gear and rotates with the driven gear.

In one embodiment, the motor-side Hall speed sensor may be arranged in the vicinity of the motor and is specifically configured to sense the rotational speed of the motor.

Alternatively, the filament-side Hall speed sensor may be arranged in the vicinity of the driven gear and is specifically configured to sense the rotational speed of the driven gear. Since the movement information of the filament is directly proportional to the rotational speed information of the driven gear, after the rotational speed information of the driven gear is obtained, the movement information of the filament can be determined based on the rotational speed information.

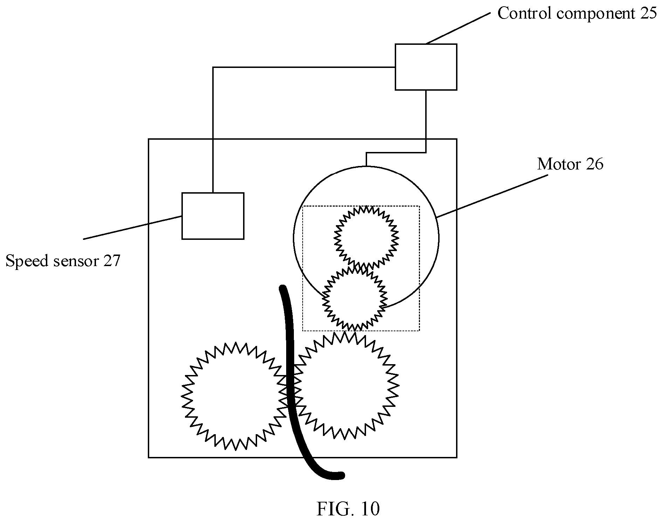

In some embodiments, as shown in FIG. 10, the filament spool holder may further comprise:
a control component 25 connected to a motor 26 and a speed sensor 27.

The control component 25 is configured to receive the rotational speed information of the motor 26 and the movement information of the filament that are sent by the speed sensor 27, and to send the control information to the motor 26.

The control component may be a control component for the feeding/retracting apparatus or a control component arranged for the filament spool holder. This is not limited in the embodiments of the present application.

Illustratively, the speed sensor 27 comprises a motor-side Hall speed sensor and a filament-side Hall speed sensor.

The control component may be connected to the motor and the speed sensor. When the control component is connected to the speed sensor, the rotational speed information of the motor and the movement information of the filament can be obtained from the speed sensor, and whether filament slippage occurs can be detected based on the rotational speed information and the movement information. Certainly, the control component may also send the rotational speed information and the movement information to other control units to identify and detect whether filament slippage occurs. This is not limited in the embodiments of the present application. Specifically, detecting whether filament slippage occurs based on the rotational speed information and the movement information comprises: determining the rotational speed of the driving gear based on the rotational speed information, determining the rotational speed of the driven gear based on the movement information, and determining that slippage occurs when the rotational speed of the driving gear is greater than the rotational speed of the driven gear.

When determining that filament slippage occurs, the control component may send the control information to the motor to stop the motor from running; when determining that no filament slippage occurs, the control component may control the motor to keep running in accordance with the previous control parameters. This is not limited in the embodiments of the present application.

In a feasible embodiment, if whether filament slippage occurs is identified and detected by other control units, the control component may send, after receiving information indicating filament slippage, control information to the motor to stop the motor from running.

In another aspect, the embodiments of the present application further provide a 3D printer. The 3D printer may comprise any one of the filament spool holders described above, and a filament spool holder body of the filament spool holder may be fixedly connected to a frame of the 3D printer and provide a filament to the 3D printer.

In some feasible embodiments, the filament spool holder body may be fixed on the frame of the 3D printer by screws.

In one embodiment, in some feasible embodiments, the filament spool holder body may be fixed on the frame of the 3D printer via a snap-fit connection.

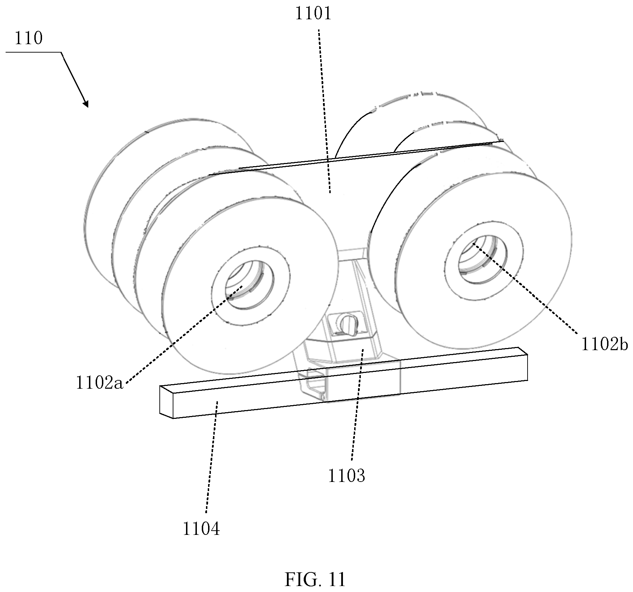

Referring to FIG. 11, FIG. 11 is a schematic diagram of another three-dimensional structure of a filament spool holder according to an embodiment of the present application. As shown in FIG. 11, a filament spool holder 110 shown in FIG. 11 comprises a filament spool holder body 1101, at least two filament cylinder reels such as a filament cylinder reel 1102a and a filament cylinder reel 1102b, and a support stand 1103.

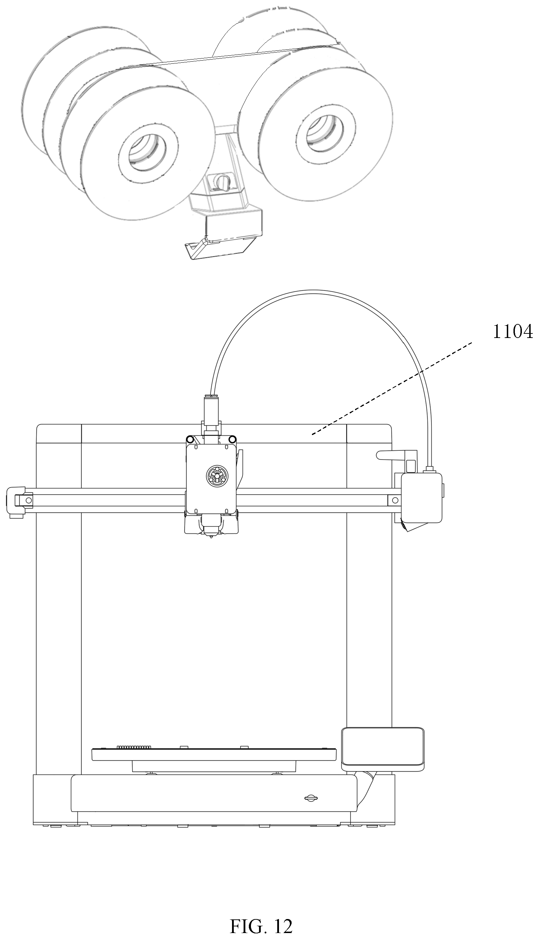

One end of the support stand 1103 is fixedly connected to the bottom of the filament spool holder body 1101, and the other end of the support stand 1103 is fixed to a frame of a 3D printer. Illustratively, as shown in FIG. 12, the filament spool holder 110 may be fixed on a cross beam 1104 of the 3D printer.

Different from the filament spool holder described in FIG. 1 to FIG. 10, the filament spool holder 110 provided in the embodiments of the present application is not provided with a feeding/retracting apparatus, and an extrusion structure in the 3D printer may be used to assist filament feeding and retracting.

In some feasible embodiments, the support stand 1103 may comprise a rotating component and a fixed component. One end of the rotating component is fixedly connected to the bottom of the filament spool holder body, and the other end of the rotating component is rotatably connected to one end of the fixed component; the other end of the fixed component is fixed to the 3D printer.

In the present application, the filament spool holder body can rotate relative to the 3D printer, and the 3D printing filament spool is held on the filament spool holder. After the printing materials on the 3D printing filament spool are used up, the user can rotate the filament spool holder body to a comfortable position for filament change. This facilitates the filament change operation of the user while saving the space of the 3D printer.

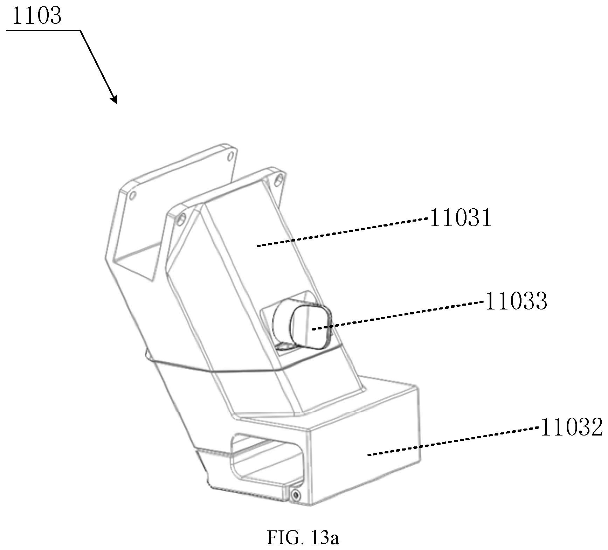

The structure of the support stand is illustratively described below with reference to FIG. 13a to FIG. 13c.

Referring to FIG. 13a, FIG. 13a is a schematic structural diagram of a support stand according to an embodiment of the present application. As shown in FIG. 13a, the support stand 1103 comprises a rotating component 11031 and a fixed component 11032. One end of the rotating component 11031 is fixedly connected to the bottom of the filament spool holder body 1101, the other end of the rotating component 11031 is rotatably connected to one end of the fixed component 11032, and the other end of the fixed component 11032 is fixed to the 3D printer.

In the present application, the filament spool holder body can rotate relative to the 3D printer, and the 3D printing filament spool is held on the filament spool holder. After the printing materials on the 3D printing filament spool are used up, the user can rotate the filament spool holder body to a comfortable position for filament change. This facilitates the filament change operation of the user while saving the space of the 3D printer.

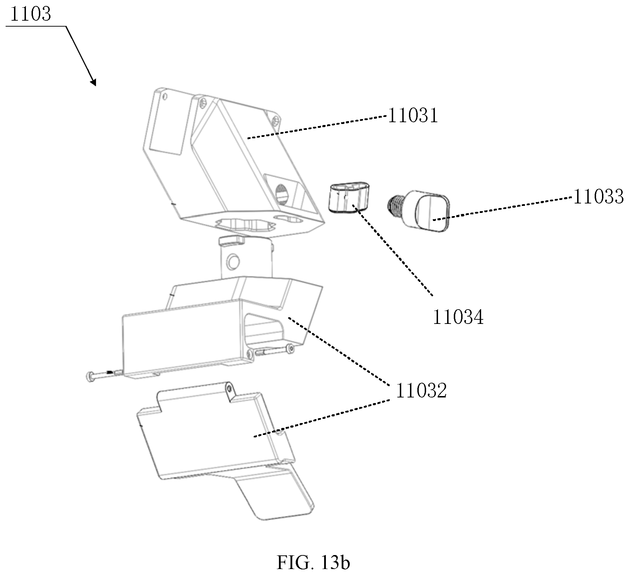

Illustratively, Referring to FIG. 13b, FIG. 13b is an exploded view of a support stand according to an embodiment of the present application. As shown in FIG. 13b, the support stand 1103 comprises a rotating component 11031 and a fixed component 11032. The rotating component 11031 is provided with a first connecting recess, and the fixed component 11032 is provided with a boss.

One end of the rotating component 11031 is fixedly connected to the bottom of the filament spool holder body 1101, the other end of the rotating component 11031 is rotatably connected to the boss of the fixed component 11032 through the first connecting recess, and one end of the rotating component 11031, facing away from the boss, is fixed to the 3D printer.

For example, the first connecting recess is an orientation recess, and the first connecting recess is aligned and engaged with the boss at a certain angle, thus achieving the rotational connection between the rotating component 11031 and the fixed component 11032. In some other feasible embodiments, a connecting member, such as a roller or a pulley, may be used to achieve the rotational connection between the two.

In one embodiment, in some feasible embodiments, the support stand further comprises a locking member. The locking member is disposed at a position where the rotating component is rotatably connected to the fixed component, and the locking member is configured to prevent, in a locked state, the rotating component from rotating relative to the fixed component, or allow, in a released state, the rotating component to rotate relative to the fixed component. In the present application, the rotation between the rotating component and the fixed component is enabled or disabled by the locking member, such that the filament spool holder body can rotate relative to the 3D printer, and the filament spool holder body can also be fixed when the filament spool holder body needs to be fixed relative to the 3D printer.

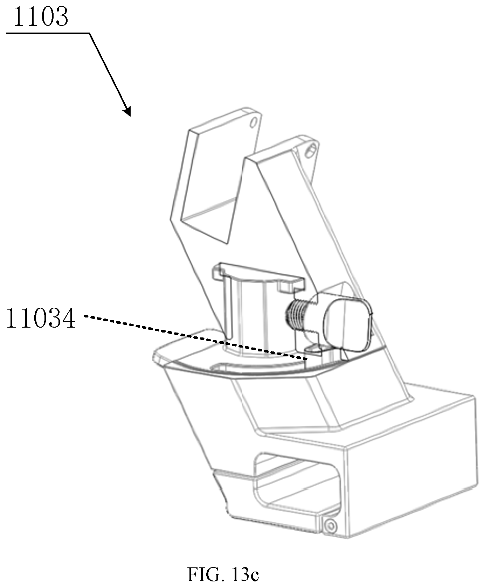

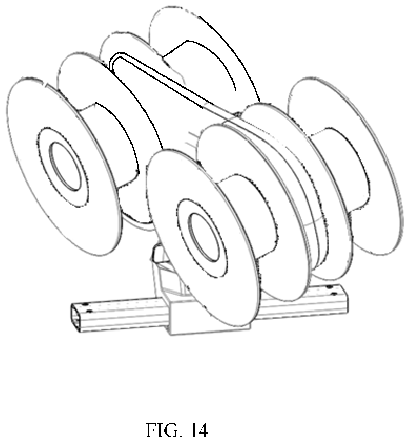

Illustratively, in FIG. 13a to FIG. 13c, taking a locking member 11033 being a bolt as an example, the rotating component 11031 is provided with a fixing hole that is on a recess wall of a side surface of the first connecting recess, and the fixed component 11032 is provided with a fixing recess that is on a side surface of the boss and corresponds to the fixing hole. When the fixing hole and the fixing recess are coaxial in the length direction of the filament cylinder rotating shaft, the locked state of the locking member 11033 is to lock the rotating component 11031 and the fixed component 11032, and the released state of the locking member 11033 is to release the rotating component 11031 and the fixed component 11032. When the locking member 11033 is in the released state, the rotating component 11031 may be rotated, such that the support stand 1103 may be changed from the state shown in FIG. 13a to the state shown in FIG. 13c, and in this case, the filament spool holder 110 may be rotated to change from the state shown in FIG. 11 to the state shown in FIG. 14.

Further, in some feasible embodiments, the filament spool holder further comprises a rotation angle limiting member, and the rotation angle limiting member is disposed between the rotating component and the fixed component. Illustratively, as shown in FIG. 13b and FIG. 13c, the fixed component 11032 is provided with a limiting recess on a surface facing the rotating component 11031, and the rotating component 11031 is provided with a limiting hole on a surface facing the fixed component 11032. The support stand 1103 further comprises a limiting block 11034, and the limiting block 11034 slides in the limiting recess after passing through the limiting hole. That is, the rotation angle of the rotating component 11031 is limited by limiting the limiting block 11034 to slide only in the limiting recess. In one embodiment, the limiting recess is arc-shaped.

In the embodiments of the present application, by providing the rotation angle limiting member to limit the rotation angle of the filament spool holder body relative to the 3D printer, the filament spool holder body can be prevented from having an excessively large rotation angle relative to the 3D printer and thereby pulling on the printing material conveyed to the 3D printer from the 3D printing filament spool.

In one embodiment, in some feasible embodiments, at least one of the rotating component and the fixed component is provided with a rotation angle limiting member. For example, the rotating component is provided with a limiting protrusion on a surface facing the fixed component, and the fixed component is provided with a limiting recess on a surface facing the rotating component. Alternatively, the rotating component is provided with a limiting recess on a surface facing the fixed component, and the fixed component is provided with a limiting protrusion on a surface facing the rotating component. In this case, the limiting protrusion may slide in the limiting recess to drive the rotating component to rotate relative to the fixed component. That is, the rotation angle of the rotating component is limited by limiting the sliding angle of the limiting protrusion in the limiting recess.

In the embodiments of the present application, by providing the rotation angle limiting member on the rotating component and/or the fixed component to limit the rotation angle of the filament spool holder body relative to the 3D printer, the filament spool holder body can be prevented from having an excessively large rotation angle relative to the 3D printer and thereby pulling on the printing material conveyed to the 3D printer from the 3D printing filament spool. In addition, the rotation angle limiting member is a part of the rotating component and/or the fixed component, such that the components of the support stand can be reduced, and the filament spool holder is more compact. In some feasible embodiments, the 3D printer is of a gantry structure, and the gantry of the 3D printer comprises a cross beam 1104. FIG. 11 shows that the other end of the support stand 1103 is detachably fixed to the frame of the 3D printer, and the other end of the support stand 1103 is specifically connected to the cross beam 1104. The filament spool holder body 1101 is plate-shaped. When the other end of the support stand 1103 is fixed to the cross beam 1104, the plane where the filament spool holder body 1101 is located is inclined relative to the plane formed by the cross beam 1104 and a column of the 3D printer.

For example, one side of the filament spool holder body 1101 is provided with at least two filament cylinder rotating shafts in the y-axis direction. Taking the case where one side of the filament spool holder body 1101 is provided with two filament cylinder rotating shafts in the y-axis direction as an example, the axes of the at least two filament cylinder rotating shafts may be on the same horizontal line; that is, the axis of the filament cylinder rotating shaft is perpendicular to the filament spool holder body. The length of the cross beam 1104 also extends along the y-axis direction, and the column of the 3D printer is arranged along the z-axis direction. In this case, the plane formed by the column and the cross beam 1104 is an oyz plane, and o represents the origin in the xyz coordinate system. The plane where the filament spool holder body is located is inclined relative to the oyz plane.

By implementing the present application, the movement space of the printing head of the 3D printer can be increased, and the printing quality is prevented from being affected due to the interference with the printing of the printing head on the z-axis when the filament spool holder body is fixed on the cross beam.

In the present application, the printing material in the 3D printing filament spool is conveyed to the 3D printer through a filament tube. That is, the filament tube connects the filament spool holder and the 3D printer. When the support stand of the filament spool holder is fixed to the cross beam of the 3D printer, the filament tube will be bent. By implementing the present application, the bending radius of the filament tube can be increased, thereby reducing the resistance of the filament in the filament tube.

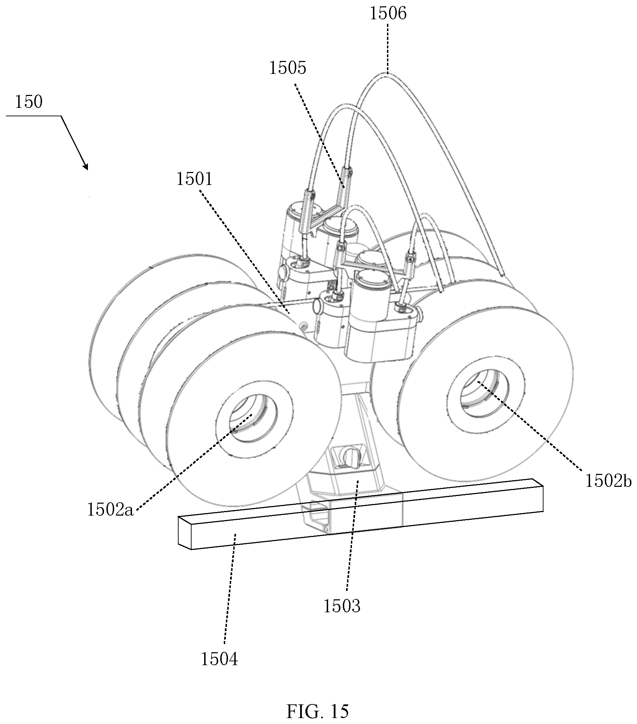

In one embodiment, in some feasible embodiments, referring to FIG. 15, FIG. 15 is a schematic diagram of another three-dimensional structure of a filament spool holder according to an embodiment of the present application. As shown in FIG. 15, a filament spool holder 150 shown in FIG. 15 comprises a filament spool holder body 1501, at least two filament cylinder reels such as a filament cylinder reel 1502a and a filament cylinder reel 1502b, and a support stand 1503.

One end of the support stand 1503 is fixedly connected to the bottom of the filament spool holder body 1501, and the other end of the support stand 1503 is fixed to a frame of a 3D printer. Illustratively, as shown in FIG. 12, the filament spool holder 150 may be fixed to a cross beam 1504 of a gantry of a 3D printer.

The filament spool holder 150 further comprises feeding/retracting apparatuses corresponding to the filament cylinder rotating shafts, a filament guide frame 1505, and a filament tube 1506. The filament tube 1506 is arranged between the filament spool holder 150 and the 3D printer and is specifically connected to a filament feeding/retracting port of the feeding/retracting apparatus and a printing head of the 3D printer.

The filament guide frame 1505 is arranged at the filament feeding/retracting port of at least one feeding/retracting apparatus, and the filament guide frame 1505 comprises an opening for a filament tube to pass through. A connection line between the opening of the filament guide frame and the filament feeding/retracting port is perpendicular to a plane where the filament feeding/retracting port is located. Illustratively, in this case, a section of the filament tube between the filament guide frame 1505 and the filament feeding/retracting port may be perpendicular to the plane where the filament feeding/retracting port is located. That is, the filament may be conveyed perpendicular to the filament feeding/retracting port, thereby reducing the filament feeding/retracting resistance of the filament in the filament tube.

For the support stand 1503 in the embodiments of the present application, reference may be made to the support stand described in FIG. 11 to FIG. 14. Details are not described herein again.

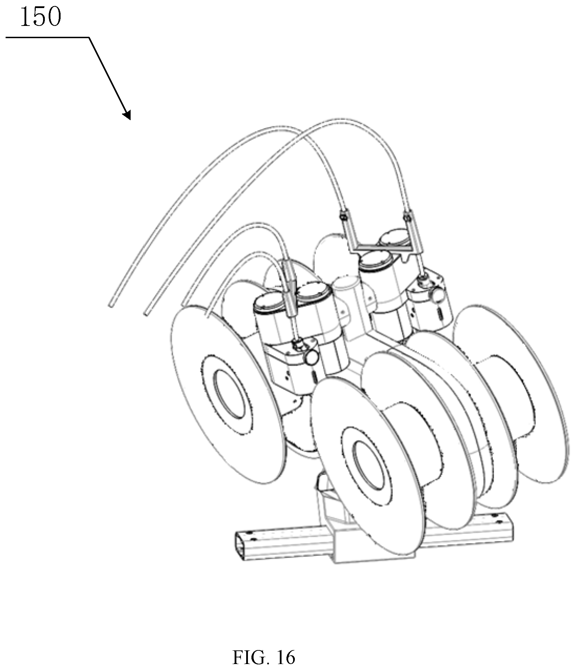

When the support stand is rotated, the filament spool holder 110 may be rotated to change from the state shown in FIG. 15 to the state shown in FIG. 16.

It can be seen that the 3D printers of two different structures are shown in FIG. 1 and

FIG. 12, but the filament spool holders shown in FIG. 1 and FIG. 12 are both provided with at least two filament cylinder rotating shafts and a support stand, and the filament spool holder on which the 3D printing filament spool is held can be fixed to the 3D printer. That is, the filament spool holder provided in the present application may be applicable to 3D printers of different structures, and the present application does not limit the structure type of the 3D printer to which the filament spool holder is specifically applied. For example, the structure of the 3D printer may be at least one of a gantry structure, a cantilever structure, a box structure, and a delta structure.

It should be noted that the terms "first" and "second" described above are used for descriptive purposes only and are not to be construed as indicating or implying relative importance.

What is disclosed above is merely preferred embodiments of the present application, and certainly is not intended to limit the protection scope of the present application. Therefore, equivalent variations made in accordance with the claims of the present application shall fall within the scope of the present application.

## Claims

1. A filament spool holder for a 3D printer, comprising:
a filament spool holder body;
at least two filament cylinder rotating shafts, connected to the filament spool holder body, wherein each filament cylinder rotating shaft is configured to hold one 3D printing filament spool; and
a support stand, fixedly connected to a bottom of the filament spool holder body and configured to support the filament spool holder body, wherein one end of the support stand is fixedly connected to the bottom of the filament spool holder body, and the other end of the support stand is fixed to the 3D printer.

2. The filament spool holder according to claim 1, further comprising:
at least two feeding/retracting apparatuses, fixed to the filament spool holder body, wherein each feeding/retracting apparatus comprises an extrusion mechanism and is configured to convey a filament in a 3D printing filament spool on a corresponding filament cylinder rotating shaft to the 3D printer, or to retract the filament to the 3D printing filament spool on the corresponding filament cylinder rotating shaft.

3. The filament spool holder according to claim 2, wherein each feeding/retracting apparatus comprises a filament feeding/retracting port, and the filament feeding/retracting port is configured to be connected to a filament tube for conveying the filament;
the filament spool holder further comprises a filament guide frame, the filament guide frame is arranged at at least one feeding/retracting apparatus, the filament guide frame compris an opening for the filament tube to pass througha connection line between the opening of the filament guide frame and the filament feeding/retracting port is perpendicular to a plane where the filament feeding/retracting port is located.

4. The filament spool holder according to claim 2 or 3, wherein the at least two filament cylinder rotating shafts comprise filament cylinder rotating shafts distributed on two sides of the filament spool holder body, and the at least two feeding/retracting apparatuses comprise feeding/retracting apparatuses distributed on the two sides of the filament spool holder body, wherein each feeding/retracting apparatus corresponds to the filament cylinder rotating shaft located on a same side.

5. The filament spool holder according to any one of claims 2 to 4, wherein the at least two filament cylinder rotating shafts comprise two filament cylinder rotating shafts located on one side of the filament spool holder body, the at least two feeding/retracting apparatuses comprise two feeding/retracting apparatuses located on a same side as the two filament cylinder rotating shafts, and the two feeding/retracting apparatuses are located between the two filament cylinder rotating shafts.

6. The filament spool holder according to claim 5, wherein for the two filament cylinder rotating shafts on the one side of the filament spool holder body, an axis of one filament cylinder rotating shaft is positioned higher than an axis of the other filament cylinder rotating shaft.

7. The filament spool holder according to any one of claims 2 to 6, wherein the at least two filament cylinder rotating shafts are in one-to-one correspondence with the at least two feeding/retracting apparatuses

8. The filament spool holder according to any one of claims 2 to 7, wherein for any one of the at least two feeding/retracting apparatuses, a filament entry of the feeding/retracting apparatus faces downward, and a filament exit of the feeding/retracting apparatus faces upward; or the filament entry of the feeding/retracting apparatus faces upward, and the filament exit of the feeding/retracting apparatus faces downward.

9. The filament spool holder according to any one of claims 2 to 8, further comprising: a control component, configured to control the feeding/retracting apparatus to provide the filament in the 3D printing filament spool on the corresponding filament cylinder rotating shaft to the 3D printer, or to control the feeding/retracting apparatus to retract the filament to the 3D printing filament spool on the corresponding filament cylinder rotating shaft.

10. The filament spool holder according to any one of claims 2 to 9, wherein the feeding/retracting apparatus comprises:
a motor;
a driving gear, connected to the motor, wherein the motor is configured to drive the driving gear to rotate; and
a driven gear, spaced apart from the driving gear, wherein the driving gear and the driven gear are configured to cooperate to clamp the filament supplied by the 3D printing filament spool.

11. The filament spool holder according to claim 10, wherein the feeding/retracting apparatus further comprises:
a gear reduction system, connected to a motor shaft of the motor, wherein an output gear of the gear reduction system meshes with the driving gear.

12. The filament spool holder according to claim 10 or **11,** wherein the feeding/retracting apparatus further comprises:
a motor-side Hall speed sensor, configured to measure rotational speed information of the motor; and
a filament-side Hall speed sensor, configured to measure rotational speed information of the driven gear.

13. The filament spool holder according to any one of claims 1 to 12, wherein the at least two filament cylinder rotating shafts being connected to the filament spool holder body comprises: the at least two filament cylinder rotating shafts being connected to the filament spool holder body via fixed tubes, the at least two filament cylinder rotating shafts being rotatably connected to the fixed tubes, and the fixed tubes being fixedly connected to the filament spool holder body.

14. The filament spool holder according to any one of claims 1 to 13, wherein the support stand comprises a rotating component and a fixed component, wherein
one end of the rotating component is fixedly connected to the bottom of the filament spool holder body, and the other end of the rotating component is rotatably connected to one end of the fixed component;
the other end of the fixed component is fixed to the 3D printer.

15. The filament spool holder according to any one of claims 1 to 14, wherein the support stand further comprises a locking member, and the locking member is disposed at a position where the rotating component is rotatably connected to the fixed component;
the locking member is configured to prevent, in a locked state, the rotating component from rotating relative to the fixed component, or allow, in a released state, the rotating component to rotate relative to the fixed component.

16. The filament spool holder according to claim 14 or 15, wherein the support stand further comprises a rotation angle limiting member, and the rotation angle limiting member is disposed between the rotating component and the fixed component.

17. The filament spool holder according to claim 14 or 15, wherein at least one of the rotating component and the fixed component is provided with a rotation angle limiting member.

18. The filament spool holder according to any one of claims 1 to 17, wherein the other end of the support stand is detachably fixed to a frame of the 3D printer.

19. The filament spool holder according to any one of claims 1 to 18, wherein the 3D printer is of a gantry structure, and the filament spool holder body is plate-shaped; the other end of the support stand is fixed to a cross beam of the 3D printer, and a plane where the filament spool holder body is located is inclined relative to a plane formed by a column of the 3D printer and the cross beam.
19. A 3D printer, comprising the filament spool holder according to any one of claims 1 to 18, wherein a filament spool holder body of the filament spool holder is fixedly connected to a frame of the 3D printer.

20. A 3D printer system, comprising a 3D printer and the filament spool holder according to any one of claims 1 to 18.
